# EUROPEAN PATENT APPLICATION

(11) **EP 4 249 959 A1**
(43) Date of publication of application: **27.09.2023**
(21) Application number: 21894230.8
(22) Date of filing: 23.03.2021
(51) Int. Cl.: G01T 1/20

(54) **RADIATION DETECTION PANEL**

(30) Priority: 19.11.2020 JP 2020192557
(71) Applicant: Canon Electron Tubes & Devices Co., Ltd., Otawara-shi, Tochigi 324-0036 (JP)
(72) Inventor: NAGAI, Masaya, Otawara-shi, Tochigi 324-0036 (JP); AIDA, Hiroshi, Otawara-shi, Tochigi 324-0036 (JP)
(74) Representative: Henkel & Partner mbB
(86) International application number: PCT/JP2021/012029
(87) International publication number: WO 2022/107353

(57) **Abstract**

Provided is a radiation detection panel that is capable of suppressing warpage of a photoelectric conversion substrate. The radiation detection panel comprises a photoelectric conversion substrate comprising a plurality of photoelectric conversion units, a scintillator layer provided on the photoelectric conversion substrate, and a moisture-proofing cover. The moisture-proofing cover and the photoelectric conversion substrate sandwich the scintillator layer, which is covered by the moisture-proofing cover. The moisture-proofing cover is formed from glass.

## Description

### Technical Field

Embodiments described herein relate generally to a radiation detection panel.

### Background Art

As radiation detectors, for example, X-ray detectors (X-ray flat panel detectors) are known. X-ray detection panels of X-ray detectors comprise a scintillator layer that converts X-rays into fluorescence and a photo-electric conversion substrate that converts the fluorescence into an electrical signal. The scintillator layer contains, for example, cesium iodide (CsI). In order to increase the efficiency of fluorescence utilization and improve sensitivity characteristics, the X-ray detection panel may further comprise a light reflecting layer on the scintillator layer.

Here, the scintillator layer and the light reflecting layer need to be isolated from the external atmosphere in order to suppress deterioration of characteristics caused by water vapor and the like. Therefore, as a structure for obtaining high moisture-proof performance, a technology has been proposed in which the scintillator layer and the light reflecting layer are covered with a hat-shaped moisture-proof cover, and the periphery of the moisture-proof cover is adhered to the photo-electric conversion substrate.

### Citation List

### Patent Literatures

Patent Literature 1: JP 2009-128023 A
Patent Literature 2: JP 2020-79787 A

### Summary of Invention

### Technical Problem

Embodiments described herein aim to provide a radiation detection panel capable of suppressing warpage of a photo-electric conversion substrate.

### Solution to Problem

According to one embodiment, there is provided a radiation detection panel comprising: a photo-electric conversion substrate including a plurality of photo-electric conversion sections; a scintillator layer provided on the photo-electric conversion substrate; and a moisture-proof cover sandwiching the scintillator layer together with the photo-electric conversion substrate and covering the scintillator layer, the moisture-proof cover being formed of glass.

### Brief Description of Drawings

FIG. 1 is a cross-sectional view of an X-ray detector according to Comparative Example 1.
FIG. 2 is a perspective view of a support substrate, an X-ray detection panel, a circuit board, a plurality of FPCs, and an image transmission unit of the above-described X-ray detector.
FIG. 3 is an enlarged cross-sectional view of a part of the above-described X-ray detection panel.
FIG. 4 is a circuit diagram of the above-described X-ray detection panel, circuit board, and plurality of FPCs.
FIG. 5 is a plan view of the above-described X-ray detection panel.
FIG. 6 is a cross-sectional view of the above-described X-ray detection panel along line VI-VI, together with the FPC.
FIG. 7 is a cross-sectional view of an X-ray detection panel according to Comparative Example 2, together with FPC.
FIG. 8 is a cross-sectional view of an X-ray detection panel according to Example 1 of an embodiment, together with FPC.
FIG. 9 is a cross-sectional view of an X-ray detection panel according to Example 2 of the above-described embodiment, together with FPC.
FIG. 10 is a cross-sectional view of an X-ray detection panel according to Example 3 of the above-described embodiment, together with FPC.
FIG. 11 is a cross-sectional view of an X-ray detection panel according to Example 4 of the above-described embodiment, together with FPC.

### Mode for Carrying Out the Invention

An embodiment and Comparative Examples will be described hereinafter with reference to the accompanying drawings. Note that the disclosure is merely an example, and proper changes within the spirit of the invention, which are easily conceivable by a skilled person, are included in the scope of the invention as a matter of course. In addition, in some cases, in order to make the description clearer, the widths, thicknesses, shapes, etc., of the respective parts are schematically illustrated in the drawings, compared to the actual modes. However, the schematic illustration is merely an example, and adds no restrictions to the interpretation of the invention. Besides, in the specification and drawings, the same or similar elements as or to those described in connection with preceding drawings or those exhibiting similar functions are denoted by like reference numerals, and a detailed description thereof may be omitted.

### (Comparative Example 1)

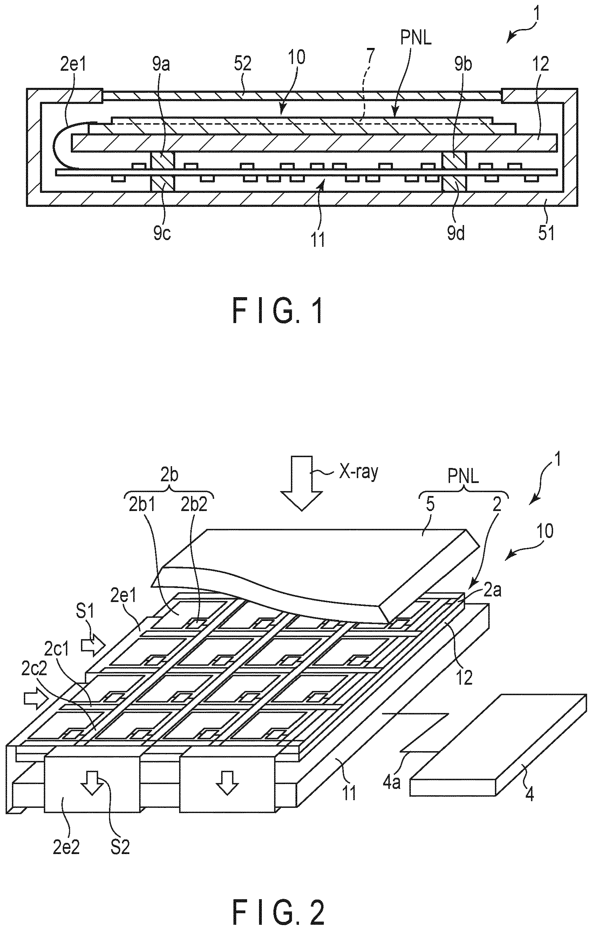

First, a configuration of an X-ray detector 1 and a manufacturing method of the X-ray detector 1 according to Comparative Example 1 will be described. FIG. 1 is a cross-sectional view of the X-ray detector 1 according to Comparative Example 1. The X-ray detector 1 is an X-ray image detector, and is an X-ray flat panel detector that utilizes an X-ray detection panel. The X-ray detector 1 is used, for example, for general medical applications.

As shown in FIG. 1, the X-ray detector 1 comprises an X-ray detection module 10, a support substrate 12, a circuit board 11, spacers 9a, 9b, 9c, and 9d, a housing 51, an incident window 52, etc. The X-ray detection module 10 comprises an X-ray detection panel PNL, a flexible printed circuit (FPC) 2e1, etc. The X-ray detection panel PNL is located between the support substrate 12 and the incident window 52. The X-ray detection panel PNL comprises a moisture-proof cover 7 facing the incident window 52.

The incident window 52 is attached to an opening of the housing 51. The incident window 52 passes X-rays therethrough. Therefore, the X-rays pass through the incident window 52 and enter the X-ray detection panel PNL. The incident window 52 is formed plate-like and functions to protect the interior of the housing 51. The incident window 52 is desirably formed thin with a material having a low X-ray absorption rate. This reduces X-ray scattering and X-ray dose attenuation occurring at the incident window 52. Therefore, a thin and light X-ray detector 1 can be realized.

The X-ray detection module 10, the support substrate 12, the circuit board 11, etc., are accommodated inside a space enclosed by the housing 51 and the incident window 52.

Since the X-ray detection panel PNL is configured by stacking thin members, it is light and has low mechanical strength. Therefore, the X-ray detection panel PNL is fixed to one flat surface of the support substrate 12 via an adhesive sheet. The support substrate 12 is formed plate-like, for example, of an aluminum alloy, and has the strength necessary to hold the X-ray detection panel PNL stably. This suppresses damage to the X-ray detection panel PNL when the X-ray detector 1 is subjected to external vibration or impact.

On the other side of the support substrate 12, the circuit board 11 is fixed via the spacers 9a and 9b. By using the spacers 9a and 9b, it is possible to maintain an electrical insulation distance from the support substrate 12, which is mainly made of metal, to the circuit board 11.

The circuit board 11 is fixed to the inner surface of the housing 51 via the spacers 9c and 9d. The spacers 9c and 9d can be used to maintain the electrical insulation distance from the housing 51, which is mainly made of metal, to the circuit board 11. The housing 51 supports the support substrate 12, etc., via the circuit board 11 and the spacers 9a, 9b, 9c, and 9d.

A connector corresponding to the FPC 2e1 is mounted on the circuit board 11, and the FPC 2e1 is electrically connected to the circuit board 11 via the connector. A thermocompression bonding method utilizing an anisotropic conductive film (ACF) is used to connect the FPC 2e1 to the X-ray detection panel PNL. This method ensures electrical connection between a plurality of fine pads of the X-ray detection panel PNL and a plurality of fine pads of the FPC 2e1, and the FPC 2e1 is physically fixed to the X-ray detection panel PNL. Note that the pads of the X-ray detection panel PNL are described later.

As described above, the circuit board 11 is electrically connected to the X-ray detection panel PNL via the above-described connector, FPC 2e1, etc. The circuit board 11 electrically drives the X-ray detection panel PNL and electrically processes output signals from the X-ray detection panel PNL.

FIG. 2 is a perspective view of the support substrate 12, the X-ray detection panel PNL, the circuit board 11, a plurality of FPCs 2e1 and 2e2, and an image transmission unit 4 of the X-ray detector 1 according to Comparative Example 1. Note that not all members of the X-ray detector 1 are shown in FIG. 2. Illustration of some of the members of the X-ray detector 1, such as a joint described later, are omitted in FIG. 2.

As shown in FIG. 2, the X-ray detection panel PNL comprises a photo-electric conversion substrate 2, a scintillator layer 5, etc. The photo-electric conversion substrate 2 includes a substrate 2a, a plurality of photo-electric conversion sections 2b, a plurality of control lines (or gate lines) 2c1, a plurality of data lines (or signal lines) 2c2, etc. Note that the number and arrangement, etc., of photo-electric conversion sections 2b, control lines 2c1, and data lines 2c2 are not limited to the example in FIG. 2.

The plurality of control lines 2c1 extend in a row direction and are arranged at predetermined intervals in a column direction. The plurality of data lines 2c2 extend in the column direction, intersect the plurality of control lines 2c1, and are arranged at predetermined intervals in the row direction.

A plurality of photo-electric conversion sections 2b are provided on one side of the substrate 2a. A photo-electric conversion section 2b is provided in a quadrangular area partitioned by the control lines 2c1 and the data lines 2c2. One photo-electric conversion section 2b corresponds to one pixel in an X-ray image. The plurality of photo-electric conversion sections 2b are arranged in a matrix. From the above, the photo-electric conversion substrate 2 is an array substrate.

Each photo-electric conversion section 2b includes a photo-electric conversion element 2b1 and a thin-film transistor (TFT) 2b2 as a switching element. The TFT 2b2 is connected to one corresponding control line 2c1 and one corresponding data line 2c2. The photo-electric conversion element 2b1 is electrically connected to the TFT 2b2.

The control line 2c1 is electrically connected to the circuit board 11 via the FPC 2e1. The circuit board 11 provides control signals S1 to the plurality of control lines 2c1 via the FPC 2e1. Data line 2c2 is electrically connected to circuit board 11 via the FPC 2e2. Image data signals S2 (electric charge stored in the photo-electric conversion section 2b) converted by the photo-electric conversion element 2b1 is transmitted to the circuit board 11 via the TFT 2b2, the data line 2c2, and the FPC 2e2.

The X-ray detector 1 comprises the image transmission unit 4. The image transmission unit 4 is connected to the circuit board 11 via a wiring line 4a. Note that the image transmission unit 4 may be assembled into the circuit board 11. The image transmission unit 4 generates an X-ray image based on image data signals converted into digital signals by a plurality of analog-to-digital converters, which are not shown. The generated X-ray image data is output from the image transmission unit 4 to an external device.

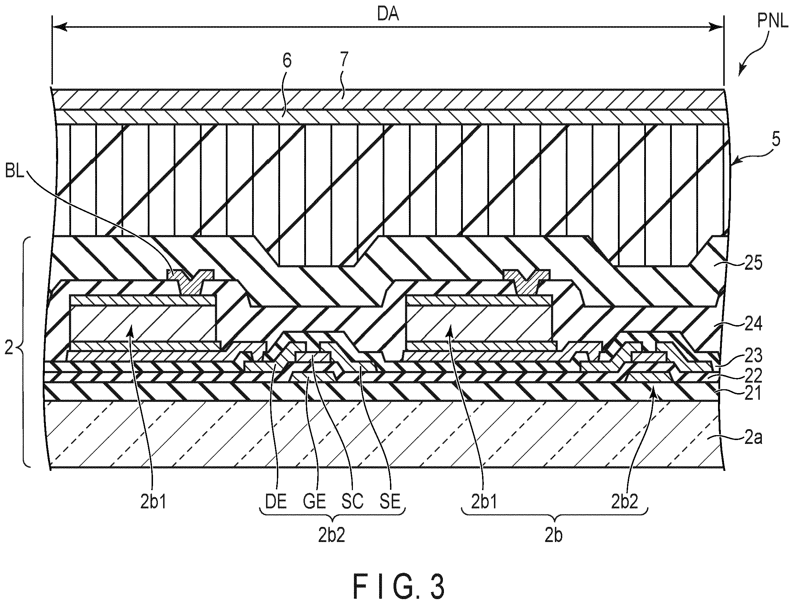

FIG. 3 is an enlarged cross-sectional view of a part of the X-ray detection panel PNL according to Comparative Example 1.

As shown in FIG. 3, the photo-electric conversion substrate 2 includes the substrate 2a, the plurality of photo-electric conversion sections 2b, and insulating layers 21, 22, 23, 24, and 25. The plurality of photo-electric conversion sections 2b are located in a detection area DA. Each photo-electric conversion section 2b comprises the photo-electric conversion element 2b1 and the TFT 2b2.

The TFT 2b2 includes a gate electrode GE, a semiconductor layer SC, a source electrode SE, and a drain electrode DE. The photo-electric conversion element 2b1 is configured by a photodiode. Note that the photo-electric conversion element 2b1 should be configured to convert light into electric charge.

The substrate 2a has a plate-like shape and is formed of an insulating material. The above-described insulating material can be glass, such as alkali-free glass. In Comparative Example 1, the substrate 2a is formed of glass, but may be formed of an organic insulating material such as resin. The planar shape of the substrate 2a is, for example, a quadrangle. The thickness of the substrate 2a is, for example, 0.5 to 0.7 mm. The insulating layer 21 is provided on the substrate 2a.

The gate electrode GE is formed on the insulating layer 21. The gate electrode GE is electrically connected to the above-described control line 2c1. The insulating layer 22 is provided on the insulating layer 21 and the gate electrode GE. The semiconductor layer SC is provided on the insulating layer 22 and faces the gate electrode GE. The semiconductor layer SC is formed of semiconductor materials such as amorphous silicon as an amorphous semiconductor and polycrystalline silicon as a polycrystalline semiconductor.

The source electrode SE and the drain electrode DE are provided on the insulating layer 22 and the semiconductor layer SC. The gate electrode GE, the source electrode SE, the drain electrode DE, and the above-described control line 2c1 and data line 2c2 are formed using low-resistance metals such as aluminum and chromium.

The source electrode SE is electrically connected to a source area of the semiconductor layer SC. The source electrode SE is also electrically connected to the above-described data line 2c2. The drain electrode DE is electrically connected to a drain area of the semiconductor layer SC.

The insulating layer 23 is provided on the insulating layer 22, the semiconductor layer SC, the source electrode SE, and the drain electrode DE. The photo-electric conversion element 2b1 is electrically connected to the drain electrode DE. The insulating layer 24 is provided on the insulating layer 23 and the photo-electric conversion element 2b1. A bias line BL is provided on the insulating layer 24 and is connected to the photo-electric conversion element 2b1 through a contact hole formed in the insulating layer 24. Insulating layer 25 is provided on the insulating layer 24 and the bias line BL.

The insulating layers 21, 22, 23, 24, and 25 are formed of insulating materials such as inorganic insulating materials and organic insulating materials. The inorganic insulating materials can be oxide insulating materials, nitride insulating materials, and oxynitride insulating materials. The organic insulating materials can be resins.

The scintillator layer 5 is provided on the photo-electric conversion substrate 2 (plurality of photo-electric conversion sections 2b). The scintillator layer 5 is located at least in the detection area DA and covers the upper portion of the plurality of photo-electric conversion sections 2b. The scintillator layer 5 is configured to convert incident X-rays into light (fluorescence).

The photo-electric conversion element 2b1 converts the light incident from the scintillator layer 5 into an electric charge. The converted electric charge is stored in the photo-electric conversion element 2b1. The TFT 2b2 can switch between storage in the photo-electric conversion element 2b1 and discharge from the photo-electric conversion element 2b1. Note that, in a case where self-capacitance of the photo-electric conversion element 2b1 is insufficient, the photo-electric conversion substrate 2 may further include a capacitor (storage capacitor), and the electric charge converted by the photo-electric conversion element 2b1 may be stored in the capacitor.

The scintillator layer 5 is formed of thallium-activated cesium iodide (CsI:Tl). If the scintillator layer 5 is formed using the vacuum evaporation method, a scintillator layer 5 composed of aggregates of a plurality of columnar crystals can be obtained. The thickness of the scintillator layer 5 is, for example, 600 um. The thickness of the columnar crystals of the scintillator layer 5 on the outermost surface of the scintillator layer 5 is 8 to 12 um.

The material forming the scintillator layer 5 is not limited to CsI:Tl. The scintillator layer 5 may be formed of thallium-activated sodium iodide (NaI:Tl), sodium-activated cesium iodide (CsI:Na), europium-activated cesium bromide (CsBr:Eu), sodium iodide (NaI), etc.

Note that, when forming the scintillator layer 5 using the vacuum evaporation method, a mask with apertures is used. In this case, the scintillator layer 5 is formed in an area facing the aperture on the photo-electric conversion substrate 2. The scintillator material by vapor deposition is also deposited on the surface of the mask. The scintillator material is also deposited near the apertures in the mask, and crystals grow so as to gradually protrude inside the apertures. As the crystals protrude into the interior of the aperture from the mask, deposition of the scintillator material on the photo-electric conversion substrate 2 is suppressed near the apertures. Therefore, as shown in FIG. 2, the thickness near the periphery of the scintillator layer 5 gradually decreases toward the outside.

Alternatively, the scintillator layer 5 may include a plurality of scintillator sections arranged in a matrix and provided one-to-one on the photo-electric conversion section 2b, each having a quadranglar prism shape. When forming such a scintillator layer 5, a scintillator material in which gadolinium oxysulfide (Gd₂O₂S) phosphor particles are mixed with a binder material is applied onto the photo-electric conversion substrate 2, and the scintillator material is baked and cured. After that, the scintillator material is diced by a dicer to form gridlike grooves thereon. In the above case, an inert gas such as air or nitrogen (N₂) for preventing oxidation is enclosed between the plurality of scintillator sections. Alternatively, the space between the plurality of scintillator sections may be set at a reduced pressure than atmospheric pressure.

In Comparative Example 1, the X-ray detection panel PNL further comprises a light reflecting layer 6. The light reflecting layer 6 is provided on the X-ray incident side of the scintillator layer 5. The light reflecting layer 6 is located at least in the detection area DA and covers the upper surface of the scintillator layer 5. The light reflecting layer 6 is provided to improve the sensitivity characteristics by increasing the utilization efficiency of light (fluorescence). In other words, the light reflecting layer 6 reflects light generated in the scintillator layer 5 that is directed toward a side opposite to the side where the photo-electric conversion section 2b is provided, and directs it to the photo-electric conversion section 2b. However, the light reflecting layer 6 is not absolutely necessary, but may be provided according to the sensitivity characteristics required for the X-ray detection panel PNL.

For example, the light reflecting layer 6 can be formed by applying a coating material in which light scattering particles comprised of titanium dioxide (TiO₂) etc., a resin, and a solvent are mixed onto the scintillator layer 5, then, drying the coating material.

Note that the structure of the light reflecting layer 6 and the method of manufacturing the light reflecting layer 6 are not limited to the above examples, but can be varied in various ways. For example, the light reflecting layer 6 may be formed by depositing a layer made of a metal with high light reflectivity, such as a silver alloy or aluminum, on the scintillator layer 5. Alternatively, the light reflecting layer 6 may be formed by providing a sheet whose surface includes a metal layer with high light reflectivity such as a silver alloy or aluminum, or a resin sheet including light scattering particles, or the like on the scintillator layer 5.

Note that, in the case of applying a paste coating material on the scintillator layer 5 and drying the above coating material, the coating material shrinks as it dries, which may add tensile stress to the scintillator layer 5 and cause the scintillator layer 5 to peel off from the photo-electric conversion substrate 2. Therefore, it is preferable to provide the light reflecting layer 6 in sheet form on the scintillator layer 5. In this case, the light reflecting layer 6 can be bonded onto the scintillator layer 5 using, for example, double-sided tape; however, it is preferable to place the light reflecting layer 6 on the scintillator layer 5. If the light reflecting layer 6 in sheet form is placed on the scintillator layer 5, it is easier to suppress the peeling of the scintillator layer 5 from the photo-electric conversion substrate 2 due to the expansion or contraction of the light reflecting layer 6.

The moisture-proof cover (moisture-proof body) 7 covers the scintillator layer 5 and the light reflecting layer 6. The moisture-proof cover 7 is provided to suppress deterioration of the characteristics of the light reflecting layer 6 and the scintillator layer 5 due to moisture contained in the air. The moisture-proof cover 7 completely covers the exposed portion of the scintillator layer 5. The moisture-proof cover 7 may leave a gap between the light reflecting layer 6, etc., or the moisture-proof cover 7 may be in contact with the light reflecting layer 6, etc.

The moisture-proof cover 7 is formed of a sheet containing metal. The above metals may include aluminum-containing metal, copper-containing metal, magnesium-containing metal, tungsten-containing metal, stainless steel, Kovar, etc. In the case where the moisture-proof cover 7 contains metal, the moisture-proof cover 7 can prevent or significantly suppress moisture permeation. Note that the expansion and contraction of the metal moisture-proof cover 7 may cause the photo-electric conversion substrate 2 to warp easily. This is because the difference between the thermal expansion coefficient of the photo-electric conversion substrate 2 (substrate 2a) and the thermal expansion coefficient of the moisture-proof cover 7 becomes large, and the photo-electric conversion substrate 2 easily warps during heating.

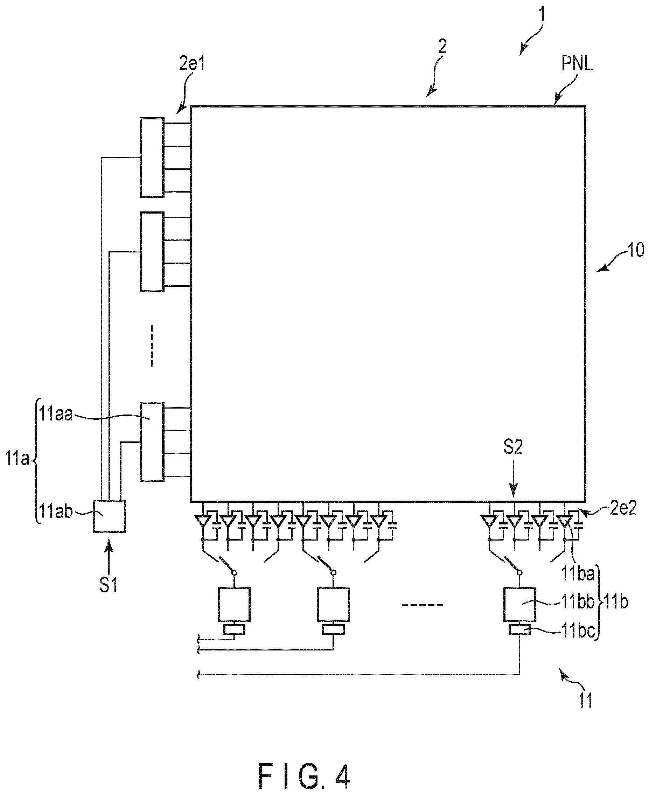

FIG. 4 is a circuit diagram of the X-ray detection panel PNL, the circuit board 11, and the plurality of FPCs 2e1 and 2e2 according to Comparative Example 1.

As shown in FIG. 2 to FIG. 4, a readout circuit 11a and a signal detection circuit 11b are provided on the circuit board 11. Note that these circuits can be provided on a single substrate, or these circuits can be provided by being divided into a plurality of substrates. The other ends of a plurality of wiring lines provided on the FPC 2e1 are electrically connected to the readout circuit 11a, respectively. The other ends of a plurality of wiring lines provided on the FPC 2e2 are electrically connected to the signal detection circuit 11b, respectively.

The readout circuit 11a switches the TFT 2b2 between an on-state and an off-state. The readout circuit 11a includes a plurality of gate drivers 11aa and a row selection circuit 11ab. The control signal S1 is input to the row selection circuit 11ab from an image processing unit or the like (not shown) provided outside the X-ray detector 1. The row selection circuit 11ab inputs the control signal S1 to the corresponding gate driver 11aa according to a scanning direction of the X-ray image. The gate driver 11aa inputs control signal S1 to the corresponding control line 2c1.

For example, the readout circuit 11a inputs the control signal S1 to a plurality of control lines 2c1 in sequence via the FPC 2e1. The control signal S1 input to control line 2c1 turns the TFT 2b2 on or off, and when the TFT 2b2 becomes an on-state, an electric charge (image data signal S2) from the photo-electric conversion element 2b1 is output to the FPC 2e2.

The signal detection circuit 11b includes a plurality of integrating amplifiers 11ba, a plurality of selection circuits 11bb, and a plurality of AD converters 11bc. One integrating amplifier 11ba is electrically connected to one data line 2c2. The integrating amplifier 11ba receives the image data signals S2 from the plurality of photo-electric conversion sections 2b in sequence. The integrating amplifier 11ba integrates a current flowing within a certain time and outputs a voltage corresponding to the integrated value to the selection circuit 11bb. In this manner, it is possible to convert the value of the current (amount of electric charge) flowing in the data line 2c2 within a predetermined time into a voltage value. In other words, the integrating amplifier 11ba converts image data information corresponding to an intensity distribution of the fluorescence generated in the scintillator layer 5 into potential information.

The selection circuit 11bb selects the integrating amplifier 11ba to perform readout, and reads out the image data signals S2 converted into potential information in sequence. The AD converter 11bc converts the read out image data signals S2 into digital signals in sequence. The image data signals S2 converted to digital signals are input to the image processing unit via wiring lines. Note that the image data signals S2 converted into digital signals may be transmitted to the image processing unit wirelessly. The image processing unit configures an X-ray image based on the image data signals S2 converted into digital signals. The image processing unit may also be integrated with the circuit board 11.

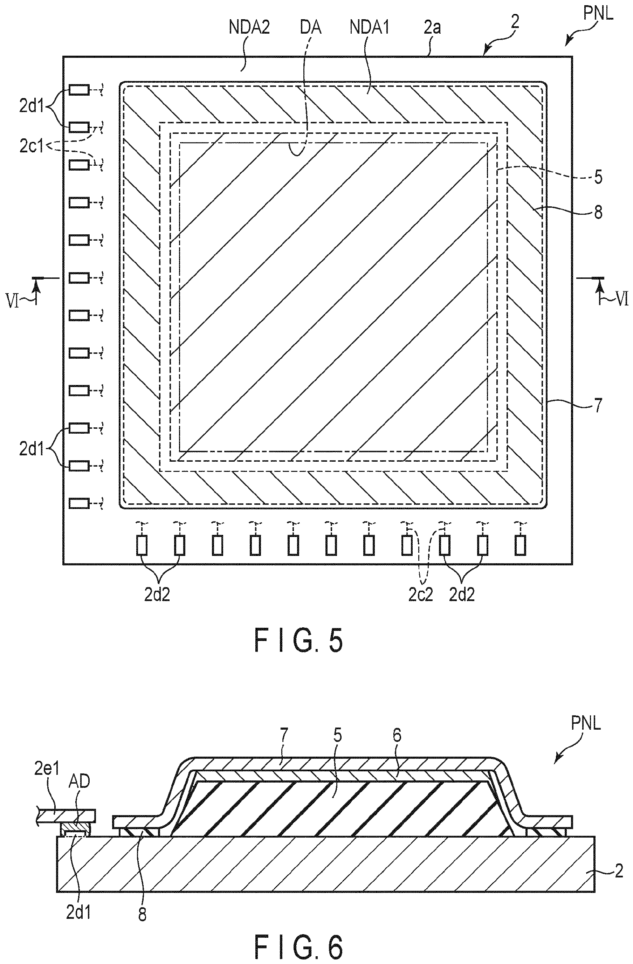

FIG. 5 is a plan view of the X-ray detection panel PNL according to Comparative Example 1. In FIG. 5, the scintillator layer 5 is shaded with a right ascending line, and a joint 8 is shaded with a right descending line. FIG. 6 is a cross-sectional view of the X-ray detection panel PNL according to Comparative Example 1 along line VI-VI, together with the FPC 2e1.

As shown in FIG. 5 and FIG. 6, the photo-electric conversion substrate 2 includes the detection area DA, a frame-shaped first non-detection area NDA1 located around the detection area DA, and a second non-detection area NDA2 outside the first non-detection area NDA1. In the present embodiment, the second non-detection area NDA2 has a frame shape.

The scintillator layer 5 is located at least in the detection area DA. The photo-electric conversion substrate 2 further includes a plurality of pads 2d1 and a plurality of pads 2d2. The pads 2d1 and the pads 2d2 are located in the second non-detection area NDA2. In the present embodiment, the plurality of pads 2d1 are aligned along the left side of the substrate 2a, and the plurality of pads 2d2 are aligned along the lower side of the substrate 2a. Note that the plurality of pads is shown schematically in FIG. 5, and the number, shape, size, location, and pitch of the plurality of pads are not limited to the example shown in FIG. 5.

One control line 2c1 extends through the detection area DA, the first non-detection area NDA1, and the second non-detection area NDA2, and is electrically connected to one of the plurality of pads 2d1. One data line 2c2 extends through the detection area DA, the first non-detection area NDA1, and the second non-detection area NDA2, and is electrically connected to one of the plurality of pads 2d2.

One pad 2d1 is electrically connected to one of the plurality of wiring lines provided on the FPC 2e1, and one pad 2d2 is electrically connected to one of the plurality of wiring lines provided on the FPC 2e2 (FIG. 2).

The X-ray detection panel PNL further comprises the joint 8. The joint 8 is provided around the scintillator layer 5. The joint 8 has a frame shape and continuously extends around the scintillator layer 5. The joint 8 is bonded to the photo-electric conversion substrate 2 (e.g., the insulating layer 25 described above).

The moisture-proof cover 7 completely covers the scintillator layer 5 in the plan view shown in FIG. 5. As shown in FIG. 6, a portion of the scintillator layer 5 that is not covered by the photo-electric conversion substrate 2 and the joint 8 is completely covered by the moisture-proof cover 7. The moisture-proof cover 7 is bonded to the joint 8. For example, if the moisture-proof cover 7 and the joint 8 are bonded in an environment where the pressure is reduced below atmospheric pressure, the moisture-proof cover 7 can be brought into contact with the light reflecting layer 6, etc. In general, the scintillator layer 5 has a void of approximately 10 to 40% of its volume. Therefore, if the voids contain gas, the gas may expand and damage the moisture-proof cover 7 in a case where the X-ray detector 1 is transported by an airplane or other means. If the moisture-proof cover 7 and the joint 8 are bonded in an environment where the pressure is reduced below atmospheric pressure, damage to the moisture-proof cover 7 can be suppressed even in the case where the X-ray detector 1 is transported by an airplane or other means. In view of the above, it is preferable that the pressure in a space defined by the joint 8 and the moisture-proof cover 7 be lower than atmospheric pressure.

The joint 8 is located between the photo-electric conversion substrate 2 and the moisture-proof cover 7 and is formed of thermoplastic resin. By heating the vicinity of the periphery of the moisture-proof cover 7, the joint 8 bonds the photo-electric conversion substrate 2 and the moisture-proof cover 7.

The FPC 2e1 is fixed to the photo-electric conversion substrate 2 (X-ray detection panel PNL) by a connecting material AD and is electrically connected to the pad 2d1. The connecting material AD is formed of ACF.

The X-ray detector 1 according to Comparative Example 1 is configured as described above.

According to the X-ray detector 1 according to Comparative Example 1 configured as described above, the photo-electric conversion substrate 2 may easily warp due to the expansion and contraction of the metal moisture-proof cover 7.

Since the joint 8 contains thermoplastic resin, the photo-electric conversion substrate 2 and the moisture-proof cover 7 can be easily bonded by heating. However, when the thermocompression bonding method is used to form the connection material AD, heat is undesirably input to the joint 8. This leads to a decrease in the viscosity of the joint 8, which can contaminate the surroundings and cause leakage paths between the photo-electric conversion substrate 2 and the moisture-proof cover 7.

To avoid heat input to the joint 8 in the subsequent process (e.g., a process of bonding the FPC 2e1), the joint 8 may be considered to be formed with a UV-curable adhesive; however, the metal moisture-proof cover 7 cannot pass UV light therethrough. Therefore, with the UV-curable type joint 8, the joint 8 cannot bond the photo-electric conversion substrate 2 and the moisture-proof cover 7 well.

Another possibility is to irradiate the UV-curable adhesive (joint 8) with UV light from the photo-electric conversion substrate 2 side. However, in order to pass the UV light through an area of the photo-electric conversion substrate 2 where the joint 8 overlaps, patterns such as metal wiring lines cannot be formed in the above area. For example, the control line 2c1 leading to the pad 2d1 cannot be formed. In the case of achieving both the formation of the wiring line pattern and the formation of the UV-curable type joint 8, there will be restrictions relating to the area where the joint 8 is to be formed.

If the metal moisture-proof cover 7 has high rigidity, in a case where the photo-electric conversion substrate 2 has flexibility, it becomes difficult to follow the deformation of the photo-electric conversion substrate 2. Therefore, it becomes difficult to form a flexible X-ray detection panel PNL.

The metal moisture-proof cover 7 is also conductive. If the moisture-proof cover 7 is brought into contact with the photo-electric conversion substrate 2, electrical signals will escape from the photo-electric conversion substrate 2 to the moisture-proof cover 7 (electrical current will flow undesirably). Therefore, the moisture-proof cover 7 is electrically insulated from the photo-electric conversion substrate 2 by an electrically insulating joint 8. Because of the above, it is difficult to bring the moisture-proof cover 7 into direct contact with the photo-electric conversion substrate 2.

### (Comparative Example 2)

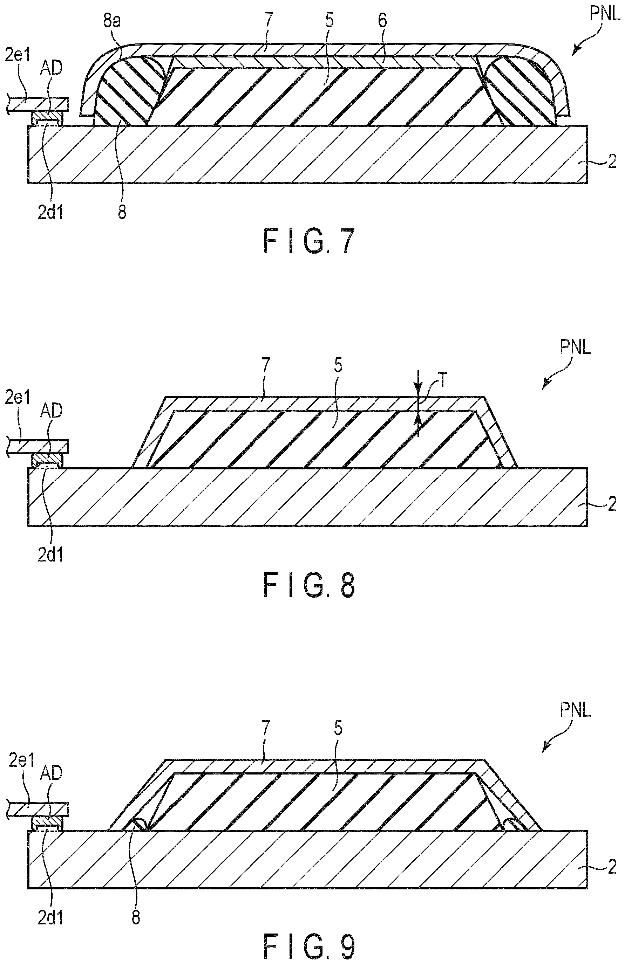

Next, a configuration of an X-ray detector 1 and a manufacturing method of the X-ray detector 1 according to Comparative Example 2 will be described. The X-ray detector 1 is configured in the same manner as in Comparative Example 1 above, except for the configuration described in the present Comparative Example 2. FIG. 7 is a cross-sectional view of an X-ray detection panel PNL according to Comparative Example 2, together with an FPC 2e1.

As shown in FIG. 7, a joint 8 is formed protruding toward a moisture-proof cover 7 side. If the shape of an outer surface 8a of the joint 8 is a curved surface protruding outward, it becomes easier for the vicinity of the periphery of the moisture-proof cover 7 to follow the outer surface 8a. Therefore, it becomes easy to bring the moisture-proof cover 7 into close contact with the joint 8. In addition, since the moisture-proof cover 7 can be gently deformed, even if the thickness of the moisture-proof cover 7 is made thinner, the occurrence of cracks or other defects in the moisture-proof cover 7 can be suppressed.

In Comparative Example 2, the moisture-proof cover 7 is formed of metal, and the joint 8 is formed of thermoplastic resin. Therefore, in the X-ray detector 1 according to Comparative Example 2, problems in the case of using a metal moisture-proof cover 7 may also occur, and problems in the case of using thermoplastic resin for the joint 8 may also occur.

### (Example 1 of one embodiment)

Next, a configuration of an X-ray detector 1 and a manufacturing method of the X-ray detector 1 according to Example 1 of one embodiment will be described. The X-ray detector 1 is configured in the same manner as in Comparative Example 1 above, except for the configuration described in the present Example 1. FIG. 8 is a cross-sectional view of an X-ray detection panel PNL according to Example 1 of one embodiment, together with an FPC 2e1.

As shown in FIG. 8, the X-ray detection panel PNL is formed without a light reflecting layer 6. However, the X-ray detection panel PNL may include the light reflecting layer 6. A substrate 2a is formed of glass or resin.

A moisture-proof cover 7 sandwiches a scintillator layer 5 together with a photo-electric conversion substrate 2 and covers the scintillator layer 5. The moisture-proof cover 7 is in contact with the photo-electric conversion substrate 2 over the entire circumference outside the scintillator layer 5 and is directly fixed to the photo-electric conversion substrate 2. The moisture-proof cover 7 is formed of glass, which is an inorganic insulating material. For example, the moisture-proof cover 7 is formed of borosilicate glass. The moisture-proof cover 7 may also be formed of aluminum silicate glass instead of borosilicate glass, and the same effect can be obtained as when borosilicate glass is used. The moisture-proof cover 7 is provided so that no gap is formed between it and the photo-electric conversion substrate 2. The moisture-proof cover 7 can prevent water vapor from infiltrating into the scintillator layer 5 from the outside.

The moisture-proof cover 7 preferably has a thickness T of 0.20 mm or less. This enables a flexible moisture-proof cover 7 to be obtained. When forming the X-ray detection panel PNL, the moisture-proof cover 7 can follow the surface shape of the scintillator layer 5 well.

The moisture-proof cover 7 is connected to the photo-electric conversion substrate 2 by fusion, for example. A member of the photo-electric conversion substrate 2 with which the moisture-proof cover 7 is in contact may be other than the above-described plurality of pads 2d1 and 2d2. However, from the viewpoint of moisture resistance, it is desirable for the moisture-proof cover 7 to be in contact with a substrate 2a formed of glass, an insulating layer formed of an inorganic insulating material, or a metal layer (not shown) that will not be adversely affected electrically, etc.

The moisture-proof cover 7 forms a space in which the scintillator layer 5 is sealed together with the photo-electric conversion substrate 2. The above space is a space in which the pressure is reduced from atmospheric pressure. It is preferable that the above space is a space in which the pressure is reduced to 0.7 atm or less. The moisture-proof cover 7 is in contact with the surface of the scintillator layer 5.

According to the X-ray detector 1 according to Example 1 configured as described above, the X-ray detection panel PNL comprises the photo-electric conversion substrate 2 including a plurality of photo-electric conversion sections 2b, the scintillator layer 5 provided on the photo-electric conversion substrate 2, and the moisture-proof cover 7 covering the scintillator layer 5.

The moisture-proof cover 7 is formed of glass. Both the moisture-proof cover 7 and the photo-electric conversion substrate 2 are formed of glass. Compared to the case where the moisture-proof cover 7 is formed of metal, the difference between the thermal expansion coefficient of the substrate 2a and the thermal expansion coefficient of the moisture-proof cover 7 can be reduced, or the difference between the above two thermal expansion coefficients can be eliminated. This can suppress or prevent the occurrence of warpage of the photo-electric conversion substrate 2 (substrate 2a) during heating.

In the manufacturing process (assembly process) of the X-ray detector 1, the photo-electric conversion substrate 2 (X-ray detection panel PNL) can be easily incorporated inside a housing 51. In addition, since the photo-electric conversion substrate 2 (substrate 2a) is prevented from warping during heating, the stress in the shear direction at an adhesive interface between the photo-electric conversion substrate 2 and the moisture-proof cover 7 is alleviated. Therefore, the reliability of the X-ray detection panel PNL can be improved.

Since glass, which is the material of the moisture-proof cover 7, is an electrical insulating material, there is no risk of electrical signals escaping from the photo-electric conversion substrate 2 to the moisture-proof cover 7. This allows the moisture-proof cover 7 to contact the photo-electric conversion substrate 2. The moisture-proof cover 7 can be brought into contact with the photo-electric conversion substrate 2 over the entire circumference outside the scintillator layer 5. Therefore, the moisture-proof cover 7, together with the photo-electric conversion substrate 2, can prevent or significantly suppress moisture permeation to a space where the scintillator layer 5 is sealed. The deterioration of the characteristics of the scintillator layer 5 can then be suppressed or prevented.

Since the insulation distance between the photo-electric conversion substrate 2 and the moisture-proof cover 7 need not be a concern, the moisture-proof cover 7 need not be fixed to the photo-electric conversion substrate 2 using the joint 8 shown in FIG. 6, etc. It is possible to avoid a situation where the characteristics of the scintillator layer 5 deteriorate due to moisture permeation through the joint 8, and contribute to improving the reliability of the X-ray detection panel PNL.

After completing the manufacture of the X-ray detection panel PNL with the moisture-proof cover 7 formed above the substrate 2a, the FPC is generally connected to the X-ray detection panel PNL using a thermocompression bonding method using a heat tool. In this process, there is no need to worry about heat input to the joint 8. Therefore, a situation where the X-ray detection panel PNL is contaminated or a leakage path of moisture occurs between the photo-electric conversion substrate 2 and the moisture-proof cover 7 can be avoided.

The moisture-proof cover 7 has not only a moisture-proof function to protect the scintillator layer 5 from moisture and a protective function to physically protect the scintillator layer 5, but also a transmission function to transmit X-rays to the scintillator layer 5 side. Therefore, it is desirable for the moisture-proof cover 7 to be formed of a material of light elements as much as possible, to have a small thickness T, and to have a structure without pinholes. The moisture-proof cover 7 made of glass can provide a moisture-proof cover 7 having a higher X-ray transmittance than the moisture-proof cover made of metal, even if the thickness T is the same.

Furthermore, a thickness T of the moisture-proof cover 7 is desirable to be 0.20 mm or less, but it is even more desirable to be 0.20 mm or less and 0.03 mm or more. It is not necessary to reduce the thickness T of the moisture-proof cover 7 to as small as a few micrometers. Since there is no risk of pinholes occurring in the moisture-proof cover 7, the risk of moisture leakage paths occurring in the moisture-proof cover 7 can be avoided.

The moisture-proof cover 7 made of glass has lower mechanical strength than the moisture-proof cover made of metal. Therefore, it can be considered that the moisture-proof cover 7 is at risk of cracking due to external pressure. However, the above risk can be avoided by using glass (Nippon Electric Glass: G-Leaf, Corning: Willow Glass, etc.), which has been developed for flexible displays in recent years, for the moisture-proof cover 7.

The moisture-proof cover 7 having a thickness T of 0.20 mm or less has a low shape retention capacity and is easily deformed by external pressure. This results in different behavior during the manufacture of the X-ray detector 1 and during the transportation of the X-ray detector 1.

During the manufacture of the X-ray detector 1, in a case where the air pressure of the space in which the scintillator layer 5 is sealed is 0.3 atm or less, the moisture-proof cover 7 is crushed until it almost sticks to the scintillator layer 5 when exposed to an atmosphere of 1 atm. If the sealing (airtightness) of the moisture-proof cover 7 is broken due to chipping, etc., it is possible to check whether the moisture-proof cover 7 is sealed or not in the manufacturing process because there is no sticking described above.

On the other hand, consider transporting the X-ray detector 1 in a case of assuming that the air pressure of the space in which the scintillator layer 5 is sealed is 1 atm. After completion of the X-ray detector 1, when it is exposed to the atmosphere of 0.7 atm during transportation by an airplane, the gas in the space where the scintillator layer 5 is sealed expands, causing the moisture-proof cover 7 to swell. In some cases, the moisture-proof cover 7 may peel off from the photo-electric conversion substrate 2, resulting in the destruction of the X-ray detection panel PNL. Therefore, it is essential to maintain the pressure of the above space at 0.7 atm or less to prevent damage to the X-ray detection panel PNL caused by the expansion of the gas in the space where the scintillator layer 5 is sealed.

By maintaining the above space in a state of reduced pressure, the moisture-proof cover 7 can be kept in contact with the scintillator layer 5. Therefore, it is possible to obtain the X-ray detector 1 that is more impact-resistant than in the case where the moisture-proof cover 7 is floating from the scintillator layer 5. Furthermore, damage to the X-ray detection panel PNL can be suppressed when the X-ray detector 1 is subjected to external vibration or impact.

### (Example 2 of one embodiment)

Next, a configuration of an X-ray detector 1 and a manufacturing method of the X-ray detector 1 according to Example 2 of the above embodiment will be described. The X-ray detector 1 is configured in the same manner as in Example 1 above, except for the configuration described in the present Example 2. FIG. 9 is a cross-sectional view of an X-ray detection panel PNL according to Example 2 of the above embodiment, together with an FPC 2e1.

As shown in FIG. 9, the X-ray detection panel PNL may further comprise a joint 8. The joint 8 is located between a photo-electric conversion substrate 2 and a moisture-proof cover 7 and bonds the photo-electric conversion substrate 2 and the moisture-proof cover 7. The joint 8 is provided over the entire circumference outside the scintillator layer 5. The joint 8 is formed by applying an adhesive containing an additive agent using a dispenser, etc.

Note that the moisture-proof cover 7 is in contact with the photo-electric conversion substrate 2 and is fixed directly to the photo-electric conversion substrate 2. Therefore, by using the joint 8, the moisture-proof cover 7 and the photo-electric conversion substrate 2 can be more firmly connected. This can improve the reliability of the X-ray detection panel PNL. In addition, it is possible to obtain an X-ray detection panel PNL with a high product yield.

For example, the joint 8 is formed with ultraviolet (UV) curable adhesive. When curing the UV-curable adhesive, UV is irradiated from above the moisture-proof cover 7, and the UV passing through the moisture-proof cover 7 is irradiated on the UV-curable adhesive. This allows the UV-curable adhesive to cure and forms the joint 8. As the UV-curable adhesive, it is preferable to use an epoxy-based, cationic polymerization type adhesive. As an additive, it is preferable to use an inorganic filler material that suppresses moisture permeability of the adhesive.

According to the X-ray detector 1 according to Example 2 configured as described above, the X-ray detection panel PNL has the same effect as in Example 1 described above. Since the moisture-proof cover 7 is formed of glass, it has a high UV transmittance. Therefore, unlike in Comparative Example 1, etc., above, where the moisture-proof cover 7 is formed of a metal such as aluminum, the moisture-proof cover 7 is able to pass UV therethrough. UV can be irradiated on the adhesive from the moisture-proof cover 7 side, not from the photo-electric conversion substrate 2 side.

It is possible to form the joint 8 at any location without being affected by the pattern of the photo-electric conversion substrate 2. This eliminates the need to form the joint 8 avoiding the pattern of the photo-electric conversion substrate 2. It is possible to eliminate restrictions on the area where the joint 8 is to be formed. Since the joint 8 can be provided overlapping wiring patterns such as control lines 2c1 and data lines 2c2 and dummy pixels, it can contribute to the miniaturization of the X-ray detector 1.

Note that, unlike in Example 2 above, the moisture-proof cover 7 may not be in contact with the photo-electric conversion substrate 2. In such a case, the moisture-proof cover 7 should be fixed indirectly to the photo-electric conversion substrate 2 via the joint 8.

Otherwise, the joint 8 may be formed of a material containing a thermoplastic resin instead of a UV-curable adhesive. The joint 8 is formed of a material containing thermoplastic resin as its main component. The joint 8 may be formed of 100% thermoplastic resin. Alternatively, the joint 8 may be formed of a material that is a thermoplastic resin mixed with additives. If the joint 8 contains thermoplastic resin as its main component, the joint 8 can bond the photo-electric conversion substrate 2 to the moisture-proof cover 7 by heating.

By using a UV-curable type joint 8, the bonding can be easily performed by heating. Since the time required for heating and cooling of the joint 8 is short, the manufacturing time can be shortened, and thus the manufacturing cost can be reduced. In addition, since there is no concern about UV irradiation on the scintillator layer 5 through the moisture-proof cover 7, it is possible to avoid discoloration of the scintillator layer 5 by UV light, and a situation where the light (fluorescence) generated in the scintillator layer 5 is absorbed by the scintillator layer 5.

Nylon, Polyethylene terephthalate (PET), polyurethane, polyester, polyvinyl chloride, Acrylonitrile Butadiene Styrene (ABS), acryl, polystyrene, polyethylene, polypropylene, etc., can be used as thermoplastic resin. In this case, the water vapor transmission rate of polyethylene is 0.068 g·mm/day·m², and the water vapor transmission rate of polypropylene is 0.04 g·mm/day·m². These water vapor transmission rates are low. Therefore, if the joint 8 contains at least one of polyethylene and polypropylene as its main components, the moisture that permeates through the inside of the joint 8 and reaches the scintillator layer 5 can be significantly reduced.

Also, the joint 8 can further contain a filler using an inorganic material. If the filler made of inorganic material is included in the joint 8, moisture permeation can be further suppressed. Talc, graphite, mica, kaolin (clay containing kaolinite as a main component), or the like can be used as the inorganic material. The filler can have, for example, a flattened form. Moisture that enters the interior of the joint 8 from the outside is prevented from diffusing by the filler made of inorganic material, thereby reducing the rate at which moisture passes through the joint 8. Therefore, the amount of moisture reaching the scintillator layer 5 can be reduced.

### (Example 3 of one embodiment)

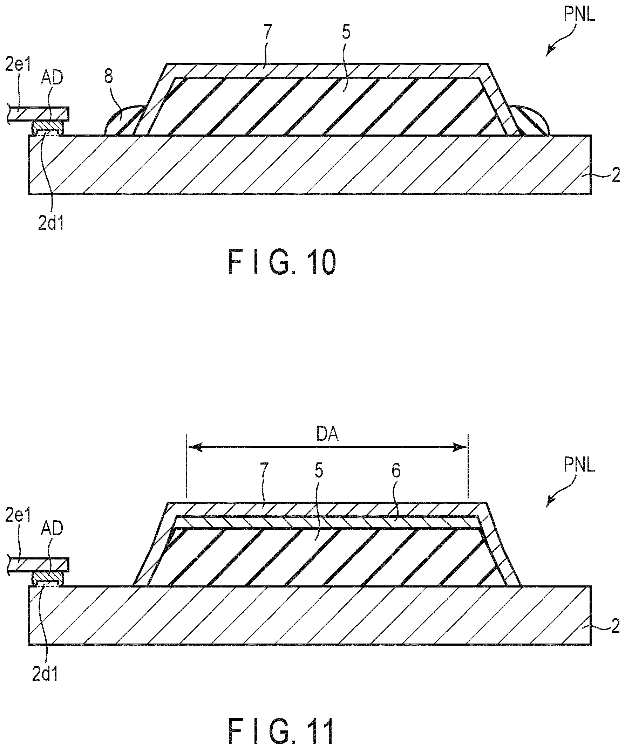

Next, a configuration of an X-ray detector 1 and a manufacturing method of the X-ray detector 1 according to Example 3 of the above embodiment will be described. The X-ray detector 1 has the same configuration as in Example 2 above, except for the configuration described in the present Example 3. FIG. 10 is a cross-sectional view of an X-ray detection panel PNL according to Example 3 of the above embodiment, together with an FPC 2e1.

As shown in FIG. 10, also in Example 3, a moisture-proof cover 7 is in contact with a photo-electric conversion substrate 2 over the entire circumference outside a scintillator layer 5 and is directly fixed to the photo-electric conversion substrate 2. Unlike in Example 2 above, a joint 8 is provided on the photo-electric conversion substrate 2 and the moisture-proof cover 7. The joint 8 covers a contact point between the photo-electric conversion substrate 2 and the moisture-proof cover 7. In Example 3, the joint 8 is provided over the entire circumference of the contact point between the photo-electric conversion substrate 2 and the moisture-proof cover 7.

According to the X-ray detector 1 according to Example 3 configured as described above, the X-ray detection panel PNL has the same effect as in Example 2 described above. As a material for forming the joint 8, it is preferable to use a thermoplastic resin with polypropylene or polyethylene as its main component from the viewpoint of moisture permeability coefficient. In addition, as an additive, it is preferable to use an inorganic filler material that suppresses moisture permeability of the adhesive. Note that there is no problem in forming the joint 8 using a UV curable adhesive, since the value of the moisture permeability coefficient can be suppressed, and the suppression of warpage of the photo-electric conversion substrate 2 is not hindered.

### (Example 4 of one embodiment)

Next, a configuration of an X-ray detector 1 and a manufacturing method of the X-ray detector 1 according to Example 4 of the above embodiment will be described. The X-ray detector 1 is configured in the same manner as in Example 1 above, except for the configuration described in the present Example 4. FIG. 11 is a cross-sectional view of an X-ray detection panel PNL according to Example 4 of the above embodiment, together with an FPC 2e1.

As shown in FIG. 11, also in Example 4, a moisture-proof cover 7 is in contact with a photo-electric conversion substrate 2 over the entire circumference outside a scintillator layer 5 and is directly fixed to the photo-electric conversion substrate 2. The X-ray detection panel PNL further comprises a light reflecting layer 6. The light reflecting layer 6 is provided facing the scintillator layer 5. The light reflecting layer 6 is located at least in a detection area DA and covers a first surface (upper surface) 5s of the scintillator layer 5 on the side facing the moisture-proof cover 7.

The moisture-proof cover 7 covers the scintillator layer 5 and the light reflecting layer 6. Therefore, the moisture-proof cover 7 can protect both the scintillator layer 5 and the light reflecting layer 6 from moisture, or physically protect both the scintillator layer 5 and the light reflecting layer 6.

The light reflecting layer 6 reflects light emitted by the scintillator layer 5 toward a plurality of photo-electric conversion sections 2b side. In other words, the light reflecting layer 6 reflects light generated in the scintillator layer 5 that is directed toward a side opposite to the side where the photo-electric conversion sections 2b are provided, so that the light is directed toward the photo-electric conversion sections 2b. The light reflecting layer 6 is provided to improve the sensitivity characteristics by increasing the utilization efficiency of light (fluorescence).

For example, the light reflecting layer 6 can be formed by coating a coating material in which a plurality of light scattering particles (a plurality of light scattering substances) comprising titanium dioxide (TiO₂) or the like, a resin-based binder, and a solvent are mixed on the scintillator layer 5, followed by drying the coating material. The light reflecting layer 6 comprises a plurality of light scattering particles and a resin-based binder.

Note that the structure of the light reflecting layer 6 and the method of manufacturing the light reflecting layer 6 are not limited to the above examples, but can be varied in various ways.

For example, the light reflecting layer 6 is a metal layer. The light reflecting layer 6 is in contact with the first surface 5s of the scintillator layer 5 and is fixed to the first surface 5s. Alternatively, the light reflecting layer 6 is in contact with a second surface 7s of the moisture-proof cover 7 on a side facing the scintillator layer 5 and is fixed to the second surface 7s. The light reflecting layer 6 can be formed by depositing a layer made of a metal with high light reflectivity, such as a silver alloy or aluminum, on the first surface 5s or the second surface 7s.

Alternatively, the light reflecting layer 6 may be a sheet in which a plurality of light scattering particles (a plurality of light scattering substances) made of titanium oxide (TiO₂) or the like are dispersed in a polyester resin.

In a case of placing the light reflecting layer 6 in sheet form on the scintillator layer 5, and in a case of forming the light reflecting layer 6 on the second surface 7s of the moisture-proof cover 7, it is desirable to arrange the light reflecting layer 6 in a manner that it is pressed against the scintillator layer 5. This is because if there is a gap between the scintillator layer 5 and the light reflecting layer 6, light generated in the scintillator layer 5 will be scattered in the above gap, causing a reduction in the resolution of an image output from the X-ray detector 1.

For example, the moisture-proof cover 7 can form a space in which the scintillator layer 5 and the light reflecting layer 6 are sealed together with the photo-electric conversion substrate 2. The above space is a space in which the pressure is reduced below atmospheric pressure. Since the light reflecting layer 6 is held in a state of pressing the first surface 5s of the scintillator layer 5, the light reflecting layer 6 can be brought into contact with the first surface 5s of the scintillator layer 5.

While one embodiment has been described, the embodiment has been presented by way of example only, and is not intended to limit the scope of the invention. Indeed, the novel embodiment described herein may be embodied in a variety of other forms; furthermore, various omissions, substitutions, and changes in the form of the embodiment described herein may be made without departing from the spirit of the invention. The accompanying claims and their equivalents are intended to cover such forms or modifications as would fall within the scope and spirit of the invention. A plurality of examples can be combined as necessary.

For example, the above-described technology is not limited to application to the above X-ray detection panel PNL and the above X-ray detector 1, but can be applied to various radiation detection panels such as other X-ray detection panels, and various radiation detectors such as other X-ray detectors. The radiation detector may comprise a radiation detection panel that detects radiation instead of the X-ray detection panel PNL.

## Claims

1. A radiation detection panel comprising:
a photo-electric conversion substrate including a plurality of photo-electric conversion sections;
a scintillator layer provided on the photo-electric conversion substrate; and
a moisture-proof cover sandwiching the scintillator layer together with the photo-electric conversion substrate and covering the scintillator layer,
the moisture-proof cover being formed of glass.

2. The radiation detection panel of claim 1, wherein
the moisture-proof cover is in contact with the photo-electric conversion substrate.

3. The radiation detection panel of claim 2, further comprising:
a joint provided on the photo-electric conversion substrate and the moisture-proof cover and covering a contact point between the photo-electric conversion substrate and the moisture-proof cover.

4. The radiation detection panel of claim 3, wherein
the moisture-proof cover is formed of borosilicate glass or aluminum silicate glass and has a thickness of 0.20 mm or less.

5. The radiation detection panel of claim 4, wherein
the moisture-proof cover forms a space that seals the scintillator layer together with the photo-electric conversion substrate, and
the space is a space in which pressure is reduced to 0.7 atm or less.

6. The radiation detection panel of claim 2, wherein
the moisture-proof cover is formed of borosilicate glass or aluminum silicate glass and has a thickness of 0.20 mm or less.

7. The radiation detection panel of claim 6, wherein
the moisture-proof cover forms a space that seals the scintillator layer together with the photo-electric conversion substrate, and
the space is a space in which pressure is reduced to 0.7 atm or less.

8. The radiation detection panel of claim 7, further comprising:
a joint located between the photo-electric conversion substrate and the moisture-proof cover and bonding the photo-electric conversion substrate and the moisture-proof cover.

9. The radiation detection panel of claim 6, further comprising:
a joint located between the photo-electric conversion substrate and the moisture-proof cover and bonding the photo-electric conversion substrate and the moisture-proof cover.

10. The radiation detection panel of claim 2, further comprising:
a joint located between the photo-electric conversion substrate and the moisture-proof cover and bonding the photo-electric conversion substrate and the moisture-proof cover.

11. The radiation detection panel of claim 1, wherein
the moisture-proof cover is formed of borosilicate glass or aluminum silicate glass and has a thickness of 0.20 mm or less.

12. The radiation detection panel of claim 11, wherein
the moisture-proof cover forms a space that seals the scintillator layer together with the photo-electric conversion substrate, and
the space is a space in which pressure is reduced to 0.7 atm or less.

13. The radiation detection panel of claim 12, further comprising:
a joint located between the photo-electric conversion substrate and the moisture-proof cover and bonding the photo-electric conversion substrate and the moisture-proof cover.

14. The radiation detection panel of claim 11, further comprising:
a joint located between the photo-electric conversion substrate and the moisture-proof cover and bonding the photo-electric conversion substrate and the moisture-proof cover.

15. The radiation detection panel of claim 1, wherein
the moisture-proof cover forms a space the seals the scintillator layer together with the photo-electric conversion substrate, and
the space is a space in which pressure is reduced to 0.7 atm or less.

16. The radiation detection panel of claim 1, further comprising:
a joint located between the photo-electric conversion substrate and the moisture-proof cover and bonding the photo-electric conversion substrate and the moisture-proof cover.

17. The radiation detection panel of claim 16, wherein
the joint is formed of a material including a UV curable adhesive or a thermoplastic resin.

18. The radiation detection panel of one of claims 1 to 17, further comprising:
a light reflecting layer provided facing the scintillator layer and reflecting light emitted by the scintillator layer toward the plurality of photo-electric conversion sections side.

19. The radiation detection panel of claim 18, wherein
the light reflecting layer
is a metal layer, and
is in contact with a first surface of the scintillator layer that faces the moisture-proof cover and fixed to the first surface, or is in contact with a second surface of the moisture-proof cover that faces the scintillator layer and fixed to the second surface.

20. The radiation detection panel of claim 18, wherein
the light reflecting layer comprises a plurality of light scattering substances and a resin-based binder.

21. The radiation detection panel of claim 18, wherein
the light reflecting layer is a sheet in which a plurality of light scattering substances are dispersed in a polyester resin.
